# EUROPEAN PATENT APPLICATION

(11) **EP 1 077 370 A2**
(43) Date of publication of application: **21.02.2001**
(21) Application number: 00306736.0
(22) Date of filing: 07.08.2000
(51) Int. Cl.: G01M 3/24

(54) **A method of testing for a leak**

(30) Priority: 14.08.1999 GB 9919128
(71) Applicant: WT Thermo TEC Ltd., Wallasey, Wirral CH44 7HS (GB); Joyce, P.J., Wirral, CH45 1JB (GB)
(72) Inventor: Joyce, Patrick John, Wallasey, Wirral CH45 1JB (GB)
(74) Representative: Walker, Ross Thomson

(57) **Abstract**

The present invention provides a method of testing for a leak or leaks in a vessel, which, in use, needs to be fluid tight or substantially fluid tight, for example, a radiator, comprising the steps of filling the vessel with pressurised air or removing or substantially removing the air from the vessel to create a vacuum, sealing the vessel and detecting the movement of air from or into the vessel by the use of ultrasonic sensors.

## Description

The present invention relates to a method of testing for a leak. In particular, the present invention relates to a method of testing whether a vessel which, in use, contains a fluid, is fluid tight. More particularly, the present invention provides a method of testing for a leak or leaks in a radiator.

Currently, in order to test whether a radiator is fluid tight after the manufacture thereof, same is filled with pressurised air, sealed and immersed into a tank of water, such that any leak will be apparent by the observation of bubbles escaping from the immersed radiator.

The current method of testing whether a radiator has a leak or leaks is usually carried out on the production line subsequent to the welding stage, and prior to the painting stage of the manufacturing process.

One of the major disadvantages associated with this known method of testing for a leak or leaks is that after testing, the radiator has to be dried prior to painting. The skilled person will appreciate that the drying of a radiator not only slows down the production of radiators, but also, increases the cost of manufacturing radiators.

Moreover, additional personnel are required to inspect and handle the radiators during the testing process, which is another factor that slows down the production of radiators and increases the manufacturing costs thereof.

Furthermore, the current method of testing for any leaks in a radiator is not suitable for use on radiators that have been painted prior to testing, since the finish of the painted radiators may be damaged during testing.

Another disadvantage associated with the current method of testing a radiator for any leaks is that if the leak is caused by a very small hole or crack present in the radiator's welded joints, it may prove difficult to actually observe the escape of bubbles from the radiator on immersion into the water tank. This is believed to account for a substantial number of faulty radiators which currently leave factories after manufacture.

Additionally, another disadvantage of the current method of testing radiators for any leaks is that the tank into which the radiators are immersed, which usually contains about 11,000 litres of water, contains chemicals that are harmful to the environment. In this connection, and before such water can be returned to the watercourse, same must be treated in order to remove such chemicals therefrom. It will be appreciated that the removal of such chemicals increases the costs of the manufacturing process. Moreover, water from the tanks may spill onto the floor of the factory where the testing is being carried out, which can be a danger to the health and safety of the workforce in the surrounding vicinity.

According to the present invention there is provided a method of testing for a leak or leaks in a vessel which, in use, needs to be fluid tight or substantially fluid tight, comprising the steps of:
filling the vessel with pressurised air or removing or substantially removing the air from the vessel to create a vacuum or partial vacuum within the vessel;
sealing the vessel; and
detecting the movement of air out of, or into, the vessel by the use of ultrasonic sensors.

Airborne ultrasonic technology is concerned with the transmission and reception of ultrasound through the atmosphere. It incorporates methods of receiving a signal that is generated through the atmosphere. Our research has established that the use of ultrasound or ultrasonic sensors in the area of a leak is a fast and accurate method of locating minute, as well as large, leaks in a vessel which, in use, needs to be fluid tight or substantially fluid tight. In this connection, and since ultrasound is a short-wave signal, the ultrasonic elements of a leak caused by the movement of air out of, or into, the vessel are louder and clearer at the site of a leak.

It is believed that the present invention provides a method of testing whether a vessel, for example, a radiator, which, in use, is required to be fluid tight, has any leaks, which overcomes the problems associated with the current method of testing for leaks, as outlined above. In particular, and since the use of water filled tanks to test for any leaks is completely dispensed with, all the disadvantages associated with the use of water tanks as outlined above is overcome and moreover, it will be appreciated that the method of the present invention dispenses with the need for the manufacturing process to include a drying stage before painting the radiators. Additionally, the method of the present invention can be carried out on painted radiators and moreover, and due to the sensitivity of the ultrasonic sensors, the method of the present invention will detect minute leaks and therefore, it is believed that the method of the present application will reduce the amount of faulty radiators leaving a factory after manufacture.

In a preferred embodiment, and once sealed, the vessel is monitored for any pressure changes, which may be indicative of a leak, in particular, a large leak. This has the advantage in that time is not wasted on carrying out the test of the present invention on vessels with large leaks. As will be appreciated, in the event that the vessel to be tested is filled with pressurised air and then sealed, a subsequent pressure drop will be indicative of a leak, whereas in the event that a vacuum or partial vacuum is created within the vessel, which is then sealed, a subsequent pressure increase will be indicative of a leak.

In a preferred embodiment, prior to testing, the welded joints or areas of the vessel are coated with a substance known as a liquid leak amplifier (LLA), which has a low surface tension. This has the advantage in that low level or minute leaks, which produce minimal turbulence on movement of the air out of or into the vessel, will still be detected.

In a preferred embodiment, the process of the present invention is carried out in a sound proof chamber. This has the advantage in that noise or ultrasound originating from outside the testing area will not result in a vessel from being falsely rejected due to the detection of such noise or ultrasound.

Further preferably, the process of the present invention further includes the step of monitoring for ultrasound not originating from a leak, which in the context of the present invention will be referred to as stray ultrasound. This has the advantage in that a vessel being tested will not be falsely rejected due to the detection of ultrasound that does not originate from a leak, for example, ultrasound generated as a result of the test chamber being hit by an object.

Further preferably, and before testing, the method of the present invention further includes the step of self-testing the ultrasonic sensors. This self-test has, the advantage in that prior to testing it enables the tester to establish whether all sensors are working correctly. In this connection, such self-test preferably involves the firing of a burst of white noise at the sensors, which all sensors must detect before the test may continue.

Two, non-limiting, examples of the method of the present invention will now be described hereinbelow:

### Example 1:

Before the radiator to be tested was moved into the testing area, the airborne ultrasonic sensors located in a testing chamber utilised to detect the changes in ultrasound produced by the escape of air from a weld on a radiator performed a self-test. This self-test has the advantage in that prior to testing it enables the tester to establish whether all sensors are working correctly. In this connection, the system fires a burst of white noise at the sensors, which all sensors must detect before the test may continue.

The welded joints or areas of the radiator to be tested were treated with a liquid leak amplifier and the radiator was then transported or manoeuvred, preferably by a mechanical handling system, into a test area, preferably, a sound proof chamber.

Once located within the sound proof chamber, the radiator was then filled with pressurised air, normally to about one or one and a half times the working pressure of the radiator, that is, to about one or one and a half times the manufacturer's standard, and sealed. Sealing was effected by sealing or blocking the input and output of the radiator.

Once sealed, the pressure within the radiator was monitored to establish whether there was a drop in pressure, since any drop in pressure would be indicative of the presence of a large leak, which, if detected, dispenses with the need of proceeding further with the test. In the event of the detection of a large leak, the radiator would be returned to the re-work area for further welding.

In the event that no pressure drop was detected, the sound proof chamber was then sealed and the ultrasonic sensors, preferably airborne ultrasonic sensors, were activated. Such sensors were arranged within the chamber such that they could detect and identify the location of a leak or leaks along the welded joints or welded areas of the radiator being tested. In this connection, it is to be understood that the radiator may be placed opposite a row of ultrasonic sensors extending along the length of the radiator's welded joints or areas and/or next to a single ultrasonic sensor that is displaceable along the welded joints or areas of a radiator.

In the event that any leaks were detected, an alarm was actuated, thereby drawing the attention of the leak, and location thereof, to the testing personnel so that they could take the appropriate action, for example, return the radiator to the re-work area for repair.

In the event that no leaks were detected, the radiator was then removed from the testing area and subjected to further processing, for example, painting.

In order to prevent the radiator from being falsely rejected, we were constantly monitoring for the existence of stray ultrasonic frequencies entering the test area or chamber during testing. This was effected by the use of a contact ultrasonic sensor, which, in use, can sense a narrow range of high frequency vibrations. Any changes in amplitude being noted by the increase or decrease in voltage. The change is noted either through a 4-20mA or 0-10V output, which is directly proportional to the signal.

### Example 2:

Before the radiator to be tested was moved into the testing area, the airborne ultrasonic sensors to be located within same, that is, to detect the movement of air into the radiator, performed a self-test. This self-test has the advantage in that prior to testing it enables the tester to establish whether all sensors are working correctly. In this connection, the system fires a burst of white noise at the sensors, which all sensors must detect before the test may continue.

The welded joints or areas of the radiator to be tested were treated with a liquid leak amplifier and the radiator was then transported or manoeuvred, preferably by a mechanical handling system, into a test area, preferably, a sound proof chamber.

Once located within the sound proof chamber, the ultrasonic sensors were inserted into the radiator and air from within the radiator was removed, thereby creating a vacuum, and the radiator was then sealed. Sealing was effected by sealing or blocking the input and output of the radiator.

Once sealed, the pressure within the radiator was monitored to establish whether there was an increase in pressure, since any increase in pressure would be indicative of the presence of a large teak, which, if detected, dispenses with the need of proceeding further with the test. In the event of the detection of a large leak, the radiator would be returned to the rework area for further welding.

In the event that no pressure increase was detected, the sound proof chamber was then sealed and the ultrasonic sensors, preferably airborne ultrasonic sensors, were activated. Such sensors were suitably arranged within the radiator such that they could detect and identify the location of a leak or leaks along the welded joints or welded areas of the radiator being tested. In this connection, it is to be understood that the ultrasonic sensors may be suitably located within the radiator along the length of the radiator's welded joints or areas and/or the ultrasonic sensor or sensors may be displaceable along the welded joints or areas of a radiator.

In the event that any leaks were detected, an alarm was actuated, thereby drawing the attention of the leak, and location thereof, to the testing personnel so that they could take the appropriate action, for example, return the radiator to the re-work area for repair.

In the event that no leaks were detected, the radiator was then removed from the testing area and subjected to further processing, for example, painting.

In order to prevent the radiator from being falsely rejected, we were constantly monitoring for the existence of stray ultrasonic frequencies entering the test area or chamber during testing. This was effected by the use of a contact ultrasonic sensor, which, in use, can sense a narrow range of high frequency vibrations. Any changes in amplitude being noted by the increase or decrease in voltage. The change is noted either through a 4-20mA or 0-10V output, which is directly proportional to the signal.

Although the method of the present invention has been described by way of example to a method of testing for any leaks in a radiator, it is to be understood that same can be used to test for any leaks in any vessel, which, in use, needs to be fluid tight or substantially fluid tight, for example, other heating appliances, towel rails, gas bottles, etc.

## Claims

1. A method of testing for a leak or leaks in a vessel, which, in use, needs to be fluid tight or substantially fluid tight including the steps of:
filling the vessel with pressurised air or removing or substantially removing the air from the vessel to create a vacuum or partial vacuum within the vessel;
sealing the vessel; and
detecting the movement of air from, or into, the vessel by the use of ultrasonic sensors.

2. The method of claim 1, wherein subsequent to sealing the vessel, the vessel is monitored for any pressure changes.

3. The method of claim 1, wherein the vessel is pressurised with air to the manufacturer's standard.

4. The method of any one of the preceding claims, further including the step of self-testing the ultrasonic sensors before the start of the testing method.

5. The method of any one of the preceding claims, wherein the vessel's welded joints or areas are coated with a liquid leak amplifier.

6. The method of any one of the preceding claims, wherein the vessel is a radiator.

7. The method of any one of the preceding claims, wherein the method further includes the step of monitoring for stray ultrasound not originating from a leak.

8. The method of any one of the preceding claims, wherein the method is carried out in a sound proof chamber.
